# EUROPÄISCHE PATENTSCHRIFT

(11) **EP 1 573 882 B1**
(45) Veröffentlichungstag und Bekanntmachung des Hinweises auf die Patenterteilung: **19.04.2006**
(21) Anmeldenummer: 03789249.4
(22) Anmeldetag: 12.12.2003
(51) Int. Cl.: H02K 3/14

(54) **SPULEN FÜR ELEKTRISCHE MASCHINEN IN LITZENTECHNIK**
LITZ WIRE COILS FOR ELECTRIC MACHINES
BOBINES POUR MOTEURS ELECTRIQUES REALISEES SELON LA TECHNIQUE DES CONDUCTEURS MULTIBRINS

(30) Priorität: 20.12.2002 DE 10260317
(43) Veröffentlichungstag der Anmeldung: 14.09.2005
(73) Patentinhaber: SIEMENS AKTIENGESELLSCHAFT, 80333 München (DE)
(72) Erfinder: OLBRICH, Irene, 13581 Berlin (DE); RISSE, Joachim, 13627 Berlin (DE); SCHÄFER, Klaus, 90455 Nürnberg (DE)
(86) Internationale Anmeldenummer: PCT/EP2003/014145
(87) Internationale Veröffentlichungsnummer: WO 2004/059817

(56) Entgegenhaltungen:
- EP-A- 0 810 249
- WO-A-00/60721
- DE-A- 3 133 811
- US-A- 4 260 924

## Beschreibung

Die vorliegende Erfindung betrifft eine Spule für eine elektrische Maschine mit einer oder mehreren Windungen, die jeweils als Litze mit einer Vielzahl von Filamenten gestaltet sind. Darüber hinaus betrifft die vorliegende Erfindung ein entsprechendes Verfahren zum Herstellen einer Spule für eine elektrische Maschine in Litzentechnologie.

Für elektrische Maschinen werden Wicklungen unter anderem aus Formspulen verwendet, die vorrangig aus Rechteckleitern hergestellt werden. Für die Rechteckleiter wurden bislang in aller Regel massive Aluminium- oder Kupferleiter eingesetzt. Es ist jedoch auch bekannt, Litzen für diesen Einsatzzweck zu verwenden, die zu Rechteckprofilen gewalzt werden.

In diesem Zusammenhang sind aus der Druckschrift WO 02/11268 Wicklungen für elektrische Maschinen mit Leitern aus Litze bekannt. Wicklungen, deren Spulen aus Litze hergestellt sind, erlauben demnach eine einfachere Herstellung als herkömmliche Formspulenwicklungen mit Rechteckdrähten. Der Begriff "Litze" hat auch hier die in der Technik übliche Bedeutung. Bei einer Litze handelt es sich nämlich um eine Vielzahl von Kupferdrähten beziehungsweise Filamenten, die miteinander verseilt und verpresst sind. Die Drähte selber sind in der Regel nicht isoliert, aber die Litze, die von viereckigem oder rechteckigem Querschnitt ist, wird mit einer Außenisolierung versehen. Es werden hochkant und flachkant gewickelte Spulen vorgestellt, die aus Litze von rechteckigem Querschnitt bestehen. Derartige Wicklungen eignen sich unter anderem für rotierende elektrische Hochspannungs- oder Niederspannungsmaschinen.

Weiterhin ist aus der deutschen Offenlegungsschrift DE 199 05 747 ein Verfahren und eine Vorrichtung zur Herstellung einer Spule mit rechteckigem Draht bekannt. Ein kreisförmiger Draht mit einem kreisförmigen Querschnitt ist auf einem Spulenrad aufgewickelt- Wenn ein Wicklungsformmotor eine Wicklungsform dreht, wird der kreisförmige Draht von dem Spulenrad gezogen. Rechteckformwalzen pressen den kreisförmigen Draht so, dass ein rechteckiger Draht mit einem rechteckigen Querschnitt erzeugt wird. Der rechteckige Draht wird direkt auf die Wicklungsform aufgewickelt, um eine Spule mit rechteckigem Draht zu erzeugen.

Des Weiteren ist aus der deutschen Patentschrift DE 44 14 527 eine elektronisch kommutierte Gleichstrommaschine bekannt. Sie besitzt Wicklungsabschnitte aus einer oder mehreren Litzen mit am Außenumfang beziehungsweise in den Zwischenräumen befindlichem, gehärtetem Kunststoff, wobei jede Litze eine Vielzahl dünner Filamente, die einzeln isoliert sind.und innerhalb der Litze verdrillt angeordnet sind, aufweist. Das Leitermaterial jedes Wicklungsabschnitts ist mit flüssigem Kunstharz verpresst, um eine Statorwicklung mit einem Leitermaterialanteil von 70 bis 90 Vol.-% zu erhalten.

Aus der Druckschrift WO 00/60721 ist eine Wicklung einer elektrischen Maschine mit Litzen bekannt. Die Hohlräume zwischen den Filamenten sind mit einem Epoxidharz oder einem Bindemittel gefüllt.

Weiterhin beschreibt das Dokument US 4 260 924 einen Litzenleiter für dynamoelektrische Maschinen, wobei die einzelnen Filamente mit einem modifizierten Polyester als innere Beschichtung umgeben sind. Eine äußere Beschichtung besteht aus einem Epoxidharz, welches nach einer Erwärmung schmilzt, so dass die einzelnen Filamente beim Erkalten in eine steife Isoliermatrix eingebunden werden.

Darüber hinaus offenbart die Druckschrift DE 31 33 811 Al eine Ein- oder Mehrschichtwicklung für elektrische Maschinen aus isolierten Runddrähten. Zur möglichst vollständigen Ausfüllung der Hohlräume enthalten die Spulen zu den isolierten Runddrähten parallel mitgewickelte dünne Fäden oder Bänder aus flexiblem, nicht leitendem Material genügend hoher Reißfestigkeit. Diese ordnen sich in den Zwischenräumen zwischen den isolierten Runddrähten an. Die zusätzlich eingewickelten Fäden oder Bänder sind mit einem Beschleuniger für das Tränkharz beschichtet. Bei der Imprägnierung der Spule nimmt das eingedrungene Tränkharz dann diese die Beschichtung bildenden Beschleuniger auf und diese bringen innerhalb kurzer Zeiträume noch innerhalb des Tränkbades das Tränkharz zum Gelieren und verhindert somit das Auslaufen nach Entnahme aus dem Tränkbad.

Die Wicklungen elektrischer Maschinen werden imprägniert, um sie zu versteifen sowie vor Durchschlägen und gegenüber Substanzen aus der Umgebung zu schützen. Üblicherweise werden die Wicklungen zwischen den Drähten oder Litzen hierzu mit Kunstharz getränkt und das Kunstharz anschließend ausgehärtet, wie dies bereits angedeutet wurde.

Die Aufgabe der vorliegenden Erfindung besteht darin, den Schutz von Wicklungen, die in Litzentechnologie hergestellt sind, zu verbessern und gegebenenfalls auch eine Verbesserung von deren elektrischen Eigenschaften herbeizuführen.

Erfindungsgemäß wird diese Aufgabe gelöst durch eine Spule für eine elektrische Maschine mit einer oder mehreren Windungen, die jeweils als Litze mit einer Vielzahl an Filamenten gestaltet sind, wobei Hohlräume zwischen den Filamenten mit einem festen oder elastischen, gegebenenfalls elektrisch leitfähigen Füllmaterial gefüllt sind, und wobei die Filamente an ihrer Oberfläche mit einem das Füllmaterial härtungsaktivierenden Überzug umgeben sind.

Ferner wird die oben genannte Aufgabe erfindungsgemäß gelöst durch ein Verfahren zum Herstellen einer Spule für eine elektrische Maschine durch Beschichten von Filamenten einer Litze mit einem härtungsaktiven Überzug, Formen der Litze zu einer vorgegebenen Spulenform und Tränken der geformten Litze mit einem aushärtbaren Füllmaterial, das bei Kontakt mit dem Überzug aushärtet.

Somit ist es möglich, die Litzen auch im Inneren gegenüber Umwelteinflüssen, Durchschlägen und dergleichen zu schützen, und zwischen den Filamenten der Litzen eine definierte Isolierung herzustellen, die zur Verbesserung der elektrischen Eigenschaften beiträgt.

Jede für das Wickeln der Spule verwendete Litze kann auch am Außenumfang mit dem Füllmaterial umgeben sein. Hierdurch können auch die Filamente am Außenumfang einer Spule wirksam geschützt werden.

Die für die Spule verwendete Litze kann derart gewalzt sein, dass sie ein Rechteckprofil besitzt. Damit kann eine hohe Nutfüllung gewährleistet werden, da die bei Runddrähten entstehenden Hohlräume vermieden werden. Die rechteckförmigen Litzen können vor oder nach dem Wickeln der Spulen mit dem jeweiligen Füllmaterial versehen werden.

Das Füllmaterial kann aus einem elektrischen leitfähigen Material bestehen. Dadurch kann die Feldstärkenverteilung im Außenbereich eines Litzenleiters gleichmäßiger gestaltet werden. Darüber hinaus stellt das Füllen der Hohlräume im Litzenleiter einen guten Wärmeübergang sicher und verbessert die mechanischen Eigenschaften der Wicklung im Wickelkopfbereich. Zusätzlich wird eine höhere Formstabilität und ein höherer Füllfaktor des Leitermaterials erreicht.

Das Füllmaterial für die Hohlräume der Litze kann hochflexibel oder sogar viskoelastisch sein. Dies hätte den Vorteil, dass die Hohlräume zwischen den Litzenleitern bereits beim Wickeln aufgrund des dabei angewandten Drucks gut ausgefüllt werden können.

Vorzugsweise werden die Hohlräume zwischen den Filamenten in den Litzen auch durch Extrusion gefüllt.

Vorteilhafterweise werden die Filamente an ihrer Oberfläche mit einem das Füllmaterial härtungsaktivierenden Überzug umgeben. Damit kann ein Auslaufen eines Tränkharzes aus den Hohlräumen vermieden werden, wenn der Überzug beispielsweise als Beschleuniger oder Katalysator wirkt.

Die vorliegende Erfindung wird nun anhand der beigefügten Zeichnungen näher erläutert, in denen zeigen:
- FIG 1: einen Querschnitt durch eine erfindungsgemäße Spule;
- FIG 2: einen Querschnitt durch eine Litze, die zum Wickeln einer Spule gemäß FIG 1 verwendet wird;
- FIG 3: einen Querschnitt durch eine Spule entsprechend einer weiteren Ausführungsform der vorliegenden Erfindung; und
- FIG 4: einen Querschnitt durch eine Litze, wie sie zur Herstellung einer Spule gemäß FIG 3 verwendet wird.

Die nachfolgenden Ausführungsformen stellen bevorzugte Ausführungsbeispiele der vorliegenden Erfindung dar.

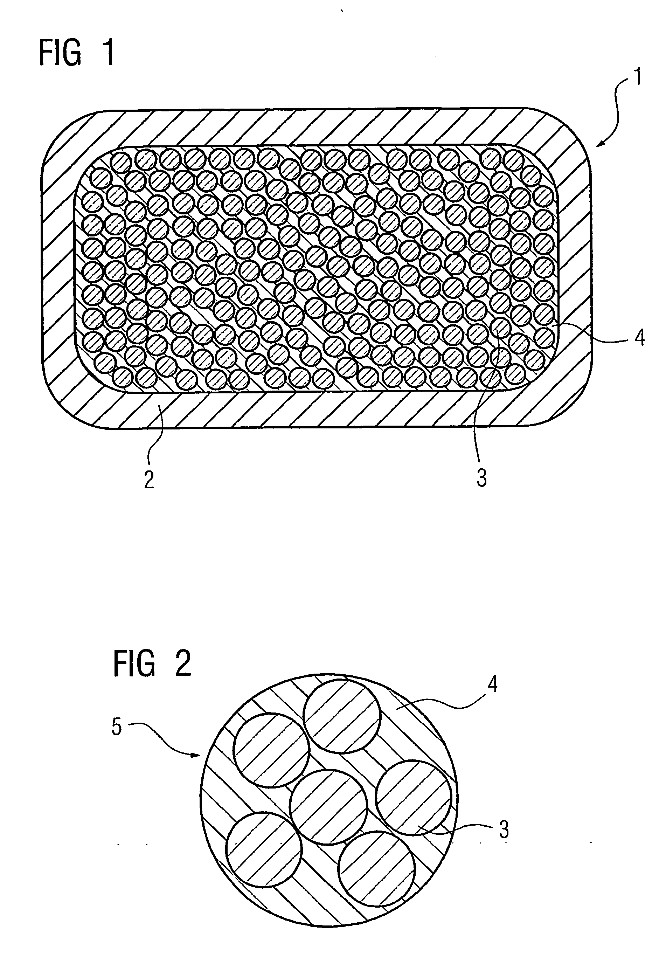

In FIG 1 ist eine Spule beziehungsweise ein Leiter 1 im Querschnitt dargestellt, wie sie/er üblicherweise in die Nuten einer elektrischen Maschine eingebracht wird. Je nach Ausführungsform besitzt er eine Teilleiter- oder Hauptisolierung 2 am Außenumfang. Im Inneren der Isolierung 2 befinden sich eine Vielzahl von Filamenten 3. Zwischen mehreren Filamenten 3 und gegebenenfalls auch zwischen den am Rand befindlichen Filamenten 3 und der Isolierung 2 befindet sich eine elastische Einbettmasse 4.

Die elastische Einbettmasse 4 zum Füllen der Hohlräume im Litzenleiter 1 stellt einen guten Wärmeübergang zwischen den Filamenten 3 sicher und verbessert die mechanischen Eigenschaften einer Wicklung im Wickelkopfbereich. Zusätzlich wird durch die Einbettmasse 4 eine höhere Formstabilität des Leiters 1 erreicht. Die fertigungstechnischen Vorteile der Litzentechnologie, nämlich das vereinfachte Einbringen der Leiter in die Nuten und das einfachere Biegen im Wickelkopfbereich, bleiben davon unberührt. Ebenfalls erhalten bleibt der Vorteil der Litzentechnologie, dass höhere Füllfaktoren des Leitermaterials in den Nuten erreicht werden können, da nur die Hohlräume zwischen den Filamenten 3 mit elastischer Einbettmasse gefüllt werden.

Die elastische Füllung besteht vorzugsweise aus einer Harzmischung, ggf. mit elektrisch- oder wärmeleitfähigen Zusätzen. Als Harz können z. B. Epoxidharzmischungen, Polyesterharze, Polyurethane, Silikonharze und- kautschuke, Elastomere aber auch Thermoplaste eingesetzt werden. Das Litzenkupfer wird durch Tränkung, Spritzguss, Extrusion o.ä. mit der elastischen Masse gefüllt. Die Glasübergangstemperaturen der Füllmassen können zwischen -60°C und +90°C liegen.

Der Leiter 1 wird gefertigt, indem eine in FIG 2 dargestellte Litze 5 mehrfach um eine Schablone beziehungsweise Wickelform oder bereits in die entsprechende Nut der elektrischen Maschine gewickelt wird. Die einzelnen Litzen 5 werden anschließend derart gegeneinander gepresst, dass beispielsweise der in FIG 1 dargestellte rechteckförmige Querschnitt des Leiters 1 erhalten wird. Dadurch, dass die Einbettmasse sehr elastisch, gegebenenfalls sogar viskoelastisch ist, werden sämtliche Hohlräume im Leiter 1 durch Einbettmasse 4 beziehungsweise Filamente 3 gefüllt. Die Einbettmasse dient hierbei nicht nur zur mechanischen Verfestigung der Filamente beziehungsweise Litzen untereinander, sondern auch zum verbesserten Wärmetransport. Dies kann durch herkömmliche Techniken nicht immer gewährleistet werden. So könnten beispielsweise bei Resin Rich isolierten Wicklungen und bei mit einem beschleunigerfreien Tränkmittel imprägnierten Wicklungsisolierungen in Ganz- oder Einzeltränkung die Zwischenräume der Litzen eines Leiters nicht oder nicht ausreichend mit Harz gefüllt werden, da das Tränkharz unter Umständen ausläuft.

Bei herkömmlichen Wicklungen mit aus Litzen ohne Füllmasse gefertigten Leitern können sich im Außenbereich des gewalzten Rechteckleiters im Vergleich zum gängigen Massivkupferleiter wegen der kleinen Radien der Kupferfilamente 3 erhöhte elektrische Randfeldstärken ergeben. Durchschläge zu angrenzendem Eisen oder Teildurchschläge sind die Folge. Bedingt durch derartige, höhere elektrische Beanspruchung wird die Lebensdauer der Isolierung bei gleicher Isolierdicke reduziert. Eine erforderliche Vergrößerung der Isolierdicke verschlechtert die Ausnutzung der Maschine. Demzufolge wird gemäß einer bevorzugten Ausführungsform der vorliegenden Erfindung eine elastische, elektrisch leitfähige Füllung in die Zwischenräume der Filamente 3 sowie auf die Oberfläche des aus mehreren Litzen 5 bestehenden Leiters 1 ein- beziehungsweise aufgebracht.

Eine elastische Füllung kann durch Zugabe von Ruß oder anderen elektrisch leitfähigen Füllstoffen auf eine gewünschte Leitfähigkeit eingestellt werden. Typische Werte für den spezifischen Durchgangswiderstand sind z.B. 1 - 250 kOhmxcm. Durch Zugabe von Füllstoffen mit erhöhter Wärmeleitfähigkeit, z. B. Aluminiumoxid, -nitrid, Bornirid kann die Wärmeabfuhr aus dem verpressten Litzenkupfer verbessert werden.

Die hier eingestellte Leitfähigkeit liegt deutlich unter der des Kupfers, sie genügt jedoch, um Äquipotenzialflächen an der Oberfläche des Leiters zu erzielen und somit eine Feldstärkenvergleichmäßigung im Außenbereich des Litzenleiters zu erreichen. Dabei kann im Vergleich zu den bisher eingesetzten Massivleitern die Ausnutzung, d.h. der Leiterquerschnitt, beibehalten werden.

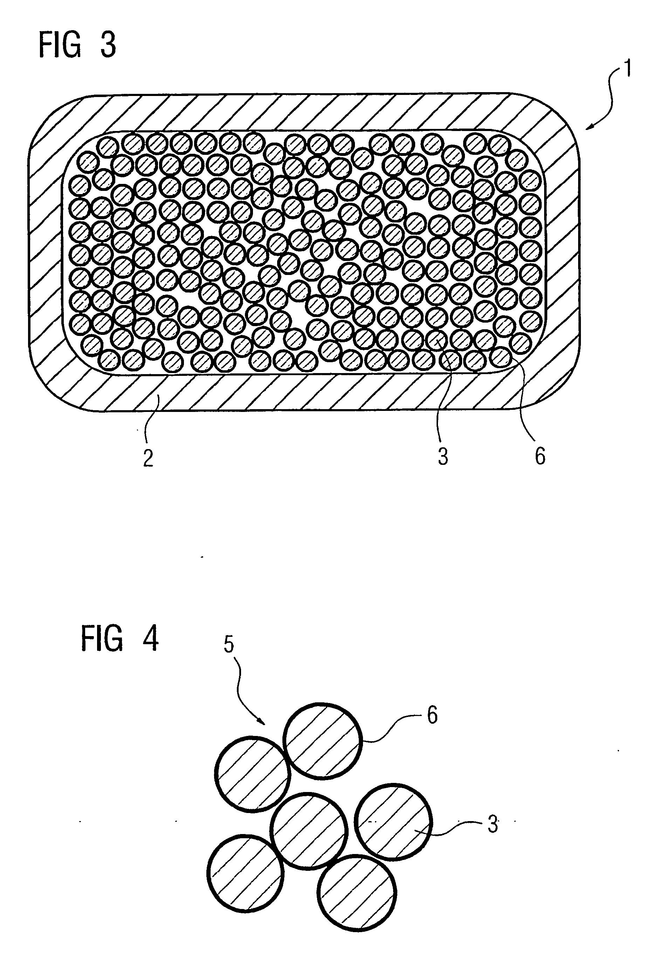

Eine weitere Ausführungsform der vorliegenden Erfindung ist in FIG 3 dargestellt. Der zu einem Rechteck gepresste Leiter 1 besitzt wiederum eine Vielzahl von Filamenten 3, die sich innerhalb der Isolierung 2 befinden. Jeder der Filamente 3 ist mit einer härtungsaktiven Beschichtung 6 überzogen.

In FIG 4 ist hierzu eine entsprechende Litze 5 dargestellt. Die Litze 5 wird im losen Zustand vor der weiteren Verarbeitung durch ein Bad gezogen, so dass die einzelnen Filamente 3 härtungsaktivierend beschichtet werden. Die beschichteten Litzen werden dann zur Herstellung des Leiters 1 entsprechend gewickelt und in Form gepresst.

Durch die Behandlung der Litze beziehungsweise des aus mehreren Litzen bestehenden Leiters 1 mit dem härtungsaktivierenden Überzug 6, der einen Beschleuniger oder Katalysator enthält, wird beim Imprägnierungsprozess das beschleunigerfreie Tränkmittel auch zwischen den Litzen chemisch aktiviert und gebunden. Damit lässt sich ein Auslaufen des Tränkmittels wegen ungenügender Aushärtung zwischen den Filamenten 3 verhindern. Die in FIG 3 dargestellten Hohlräume zwischen den einzelnen Filamenten und im Randbereich zu der Isolierung 2 werden durch den Tränkungsprozess damit vollständig gefüllt. Dies stellt, wie bereits erwähnt, einen guten Wärmeübergang und verbesserte mechanische und elektrische Eigenschaften der Wicklung, insbesondere auch im Wickelkopfbereich, sicher.

Beschleunigerfreie Tränkmittel sind in diesem Zusammenhang z. B. Epoxidharzanmischungen, die nur in Verbindung mit einem Beschleuniger bei Temperatur in einer vertretbaren Zeit aushärten, diesen Beschleuniger aber nicht direkt in der Mischung enthalten, um die Lagerstabilität der Harzmischung nicht zu verringern. Der Beschleuniger ist statt dessen in oder auf den Tränkobjekten, hier der Kupferlitze, aufgebracht.

Ein härtungsaktivierender Überzug ist beispielsweise ein beschleunigerhaltiger Lack oder eine beschleunigerhaltige Harzmischung, bestehend aus einem Bindemittel und einem auf das Tränkmittel abgestimmten Beschleuniger. Dies kann z. B. ein Amin, eine Lewis Säure oder Lewis Base, eine quartäre Ammonium- oder Phosphoniumverbindung, oder katalytische und peroxidische Härtungsaktivatoren sein. Aufgebracht wird dieser Überzug, wie oben erwähnt, z. B. durch Tauchen der Kupferlitzen und anschließendem Abdunsten der Lösungsmittelanteile und ggf. Aushärtung des aufgetragenen Überzuges.

## Patentansprüche

1. Spule (1) für eine elektrische Maschine mit
- einer oder mehreren Windungen, die jeweils als Litze (5) mit einer Vielzahl an Filamenten (3) gestaltet sind, wobei Hohlräume zwischen den Filamenten mit einem festen oder elastischen Füllmaterial (4) gefüllt sind,
**dadurch gekennzeichnet, dass**
die Filamente (3) an ihrer Oberfläche mit einem das Füllmaterial härtungsaktiviereadea Überzug (6) umgeben sind.

2. Spule nach Anspruch 1, wobei die Litze (5) auch an ihrem Außenumfang mit dem Füllmaterial (4) umgeben ist.

3. Spule nach Anspruch 1 oder 2, wobei die Litze (5) derart gewalzt ist, dass sie ein Rechteckprofil besitzt.

4. Spule nach einem der Ansprüche 1 bis 3, wobei das Füllmaterial (4) elektrisch leitfähig ist.

5. Spule nach einem der Ansprüche 1 bis 4, wobei das Füllmaterial (4) viskoelastisch ist.

6. Spule nach einem der Ansprüche 1 bis 5, wobei der Überzug (6) einen Beschleuniger oder Katalysator umfasst.

7. Wicklung für eine elektrische Maschine mit einer Spule nach einem der Ansprüche 1 bis 6.

8. Elektrische Maschine mit einer Wicklung nach Anspruch 7.

9. Verfahren zum Herstellen einer Spule (1) für eine elektrische Maschine durch
- Beschichten von Filamenten (3) einer Litze (5) mit einem härtungsaktiven Überzug (6),
- Formen der Litze (5) zu einer vorgegebenen Spulenform und
- Tränken der geformten Litze (5) mit einem aushärtbaren Füllmaterial (4), das bei Kontakt mit dem Überzug aushärtet.

10. Verfahren nach Anspruch 9, wobei der Überzug (6) einen Beschleuniger oder Katalysator umfasst.

11. Verfahren zum Herstellen einer Spule gemäß einem der Ansprüche 1 bis 6, wobei die Hohlräume zwischen den Filamenten (3) durch Extrusion gefüllt werden.

## Revendications

1. Bobine (1) pour un moteur électrique comprenant
- une ou plusieurs spires qui sont conformées, respectivement, en cordon ayant une pluralité de filaments (3), des cavités entre les filaments étant emplies d'une matière (4) de charge rigide ou élastique,
**caractérisée en ce que** les filaments sont entourés sur leur surface d'un revêtement (6) activant le durcissement de la matière de charge.

2. Bobine suivant la revendication 1, dans laquelle le cordon est entouré aussi sur son pourtour extérieur de la matière (4) de charge.

3. Bobine suivant la revendication 1 ou 2, dans laquelle le cordon (5) est laminé de manière à avoir un profil rectangulaire.

4. Bobine suivant l'une des revendications 1 à 3, dans laquelle la matière (4) de charge est conductrice de l'électricité.

5. Bobine suivant l'une des revendications 1 à 4, dans laquelle la matière (4) de charge est viscoélastique.

6. Bobine suivant l'une des revendications 1 à 5, dans laquelle le revêtement (6) comprend un accélérateur ou un catalyseur.

7. Enroulement pour un moteur électrique ayant une bobine suivant l'une des revendications 1 à 6.

8. Moteur électrique ayant un enroulement suivant la revendication 7.

9. Procédé de fabrication d'une bobine (1) pour un moteur électrique par
- application aux filaments (3) d'un cordon (5) d'un revêtement (6) activant le durcissement ;
- conformation du cordon (5) en une forme de bobine prescrite ; et
- imprégnation du cordon (5) conformé d'une matière (4) de charge durcissable, qui durcit au contact du revêtement.

10. Procédé suivant la revendication 9, dans lequel le revêtement (6) comprend un accélérateur ou un catalyseur.

11. Procédé de fabrication d'une bobine suivant l'une des revendications 1 à 6, dans lequel on remplit les cavités entre les filaments (3) par extrusion.

## Claims

1. Coil (1) for an electrical machine with
- one or more windings, each designed as litz wires (5) with a plurality of filaments (3), with spaces between the filaments being filled with a fixed or elastic filler material (4).
**characterized in that**
the surface of the filaments (3) is surrounded by a coating (6) activating the hardening of the filler material.

2. Coil in accordance with claim 1, where the external circumference of the litz wires (5) is also surrounded by the filler material (4).

3. Coil in accordance with claim 1 or 2, with the litz wire (5) being rolled so that it possesses a rectangular profile.

4. Coil in accordance with one of the claims 1 to 3, with the filler material (4) being electrically conductive.

5. Coil in accordance with one of the claims 1 to 4, with the filler material (4) being visco-elastic.

6. Coil in accordance with one of the claims 1 to 5, with the coating (6) comprising an accelerator or catalyser.

7. Winding for an electrical machine with a coil in accordance with one of the claims 1 to 6.

8. Electrical machine with a winding in accordance with claim 7.

9. Method for manufacturing a coil (1) for an electrical machine by
- Coating filaments (13) of a litz wire (5) with an hardening activation coating (6),
- Forming the litz wires (5) into a predetermined coil form and
- Impregnating the formed litz wires (5) with a hardenable filler material (4), which hardens on contact with the coating.

10. Method in accordance with claim 9, with the coating (6) comprising an accelerator or catalyser.

11. Method for manufacturing a coil in accordance in accordance with one of the claims 1 to 6, where the spaces between the filaments (3) are filled by extrusion.
